# EUROPEAN PATENT APPLICATION

(11) **EP 1 897 843 A2**
(43) Date of publication of application: **12.03.2008**
(21) Application number: 07115826.5
(22) Date of filing: 06.09.2007
(51) Int. Cl.: B66F 9/075, B60K 1/04

(54) **Hybrid industrial vehicle**

(30) Priority: 08.09.2006 JP 2006244522
(71) Applicant: KABUSHIKI KAISHA TOYOTA JIDOSHOKKI, Kariya-shi, Aichi 448-8671 (JP)
(72) Inventor: Murase, Takashi, Kariya-shi Aichi 448-8671 (JP); Nakano, Ryuji, Kariya-shi Aichi 448-8671 (JP); Shibahara, Fumihiro, Kariya-shi Aichi 448-8671 (JP)
(74) Representative: TBK-Patent

(57) **Abstract**

A hybrid forklift having a vehicle driving motor, a hydraulic pump, an engine, a pump actuating motor, and a battery is disclosed. The vehicle driving motor is the drive source for running the forklift. The engine and the pump actuating motor are the drive sources for the hydraulic pump. The battery is the power supply for the vehicle driving motor and the pump actuating motor. The battery is placed lateral to, beneath, or in front of the engine so as to be separated from the path for discharging the heat emitted from the engine.

## Description

### BACKGROUND OF THE INVENTION

The present invention relates to a hybrid industrial vehicle, and in particular, to a hybrid industrial vehicle, such as a forklift, which is characterized by the arrangement of the battery.

Japanese Laid-Open Patent Publication No. 11-199189 discloses a battery-powered forklift. This battery-powered forklift is provided with a battery accommodating portion for placing a portion of the battery above the rear wheels. In addition, a space is provided beneath the battery accommodating portion so that parts relating to the steering (not shown) are arranged therein. A battery hood is provided above the battery accommodating portion so that it can be opened or closed, and a seat is provided above this battery hood.

Japanese Laid-Open Patent Publication No. 2000-74936 discloses an engine forklift. In this engine forklift, the seat is provided above the hood in the vicinity of the rear portion of the body, and the engine is placed beneath the hood.

In addition, "hybrid cars" have been put into practice in the field of automobiles which run by an internal combustion engine as the drive source. In hybrid cars, the drive wheels are driven by the motor at the time of start-up or when the speed is in a low range in order to increase fuel efficiency and reduce exhaust gas, and the drive wheels are driven by the engine when the speed is in middle and high ranges. In the field of industrial vehicles, such as forklifts, however, no hybrid cars have been put into practice.

Industrial vehicles, such as forklifts, require a drive source for actuating the hydraulic pump of a hydraulic circuit for cargo handling in addition to a drive source for driving the drive wheels which are required for traveling of the vehicle. In addition, it is preferable for the size of the entire industrial vehicles to be small from the point of view of applications in areas where the vehicle can enter and operate. Therefore, it is preferable to arrange the drive source and the battery for the drive source as compactly as possible so that the entirety of the vehicle can be miniaturized. In hybrid vehicles, the battery, which is the electric power source for the motor, which is a drive source, needs to be air cooled. In addition, the engine which is provided in a hybrid car as a drive source together with a motor emits a large amount of heat, and therefore, it is necessary to prevent the heat emitted from the engine from heating the battery.

### SUMMARY OF THE INVENTION

An objective of the present invention is to provide a hybrid industrial vehicle in which the heat from the engine is prevented from adversely affecting the battery, which is the power supply for a vehicle driving motor.

In order to achieve the above described object, according to one embodiment of the present invention, a hybrid industrial vehicle including a vehicle drive motor, a hydraulic pump, an engine and a pump actuating motor, and a battery is provided. The vehicle driving motor is a drive source for driving the vehicle. The engine and the pump actuating motor are drive sources for the hydraulic pump. The battery is a power source for the vehicle driving motor and the pump actuating motor. The battery is placed lateral to, beneath, or in front of the engine so as to be separated from a path for discharging heat emitted from the engine.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a side view schematically showing a forklift according to one embodiment of the present invention;
Fig. 2 is a plan view schematically showing the arrangement of the battery, and the engine in the forklift of Fig. 1;
Fig. 3 is a perspective view schematically showing the air conditioner of Fig. 1;
Fig. 4 is a perspective view schematically and partially showing the relationship among a door, a duct, and a duct outlet in the cab of Fig. 1;
Fig. 5 is a side view schematically showing the forklift of Fig. 1, with a door omitted;
Fig. 6 is a perspective view schematically showing the battery of Fig. 1 and the air blowing apparatus provided with the battery;
Fig. 7 is a schematic view showing the battery of Fig. 6;
Fig. 8 is a plan view schematically showing the arrangement of the battery and the air blowing apparatus according to another embodiment;
Fig. 9 is a plan view schematically showing the arrangement of the battery, and the engine according to another embodiment; and
Fig. 10 is a side view schematically showing the arrangement of the battery and the engine according to another embodiment.

### DETAILED DESCRIPTION OF THE PREFERRED EMBODIMENTS

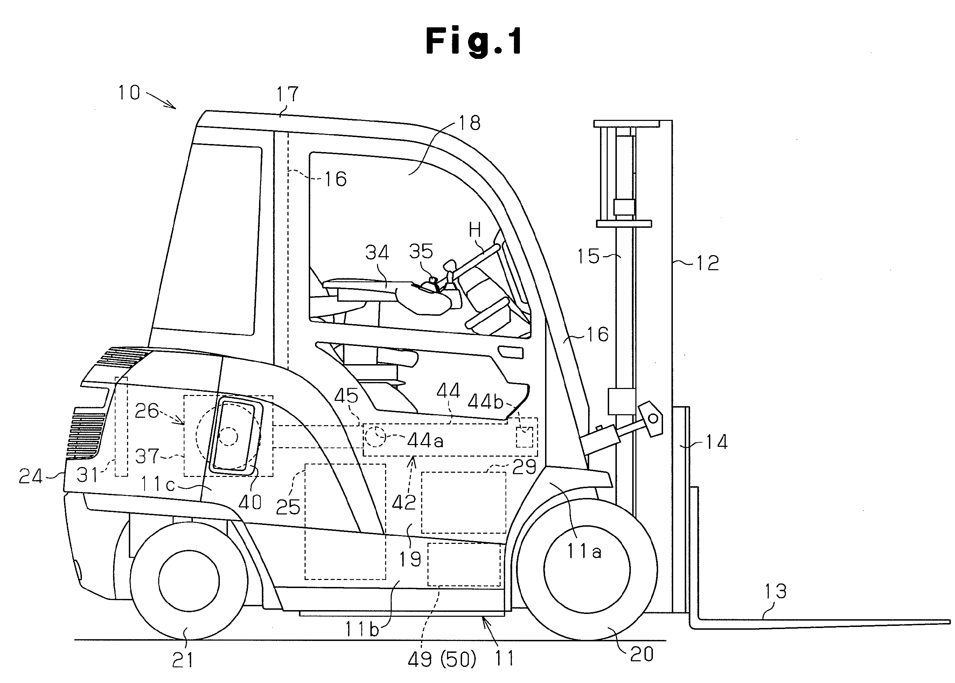

In the following, a hybrid forklift 10 according to one embodiment of the present invention will be described in reference to Figs. 1 to 7.

As shown in Fig. 1, the hybrid forklift (hereinafter, simply referred to as forklift) 10 is provided with a vehicle body frame 11 which forms the body and a mast 12 placed in front of this. The right in Fig. 1 is defined as the front of the forklift 10, and the left is defined as the rear of the forklift 10. The mast 12 is equipped with a fork 13 with a lift bracket 14. The fork 13 is raised and lowered together with the lift bracket 14 when the lift cylinder 15 operates so as to extend and contract. The cargo handling actuators for of the lift cylinder 15 and the tilt cylinder (not shown) for tilting the fork 13 operate when receiving supply of hydraulic oil through the hydraulic oil circuit, including a hydraulic pump 30.

Four poles 16 are provided in the vehicle body frame 11, and the poles 16 on the front from among these are formed so as to be integrated with a head guard 17. The space surrounded by the poles 16 and the head guard 17 forms the cab 18. The cab 18 is separated from the outside by the windows on the front and rear side and the doors 19, which are provided on both sides, left and right, and can be opened and closed. The cab 18 can be opened to the outside via the doors 19.

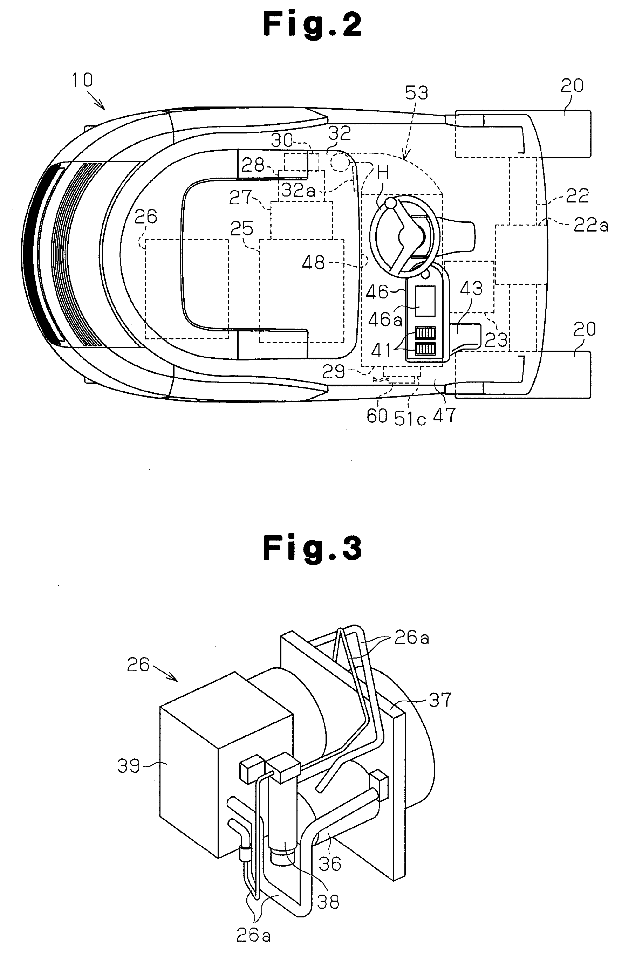

Drive wheels (front wheels) 20 are provided in the front portion of the body and steering wheels (rear wheels) 21 are provided in the rear portion of the body. As shown in Fig. 2, the drive wheels 20 are driven by a vehicle driving motor 23 via a differential apparatus 22a which is mounted on the axle 22 and gears (not shown). In addition, the steering wheels 21 are steered in accordance with the operation of the steering wheel H.

The vehicle body frame 11 includes a front frame portion 11a, side frame portions 11b and a rear frame portion 11c. The front frame portion 11a and the side frame portions 11b are respectively formed of a thick plate (steel plate) and welded to each other so as to be integrated. The rear frame portion 11c is formed of, for example, a cast metal and secured to the respective rear portions of the left and right side frame portions 11b with bolts (not shown). A counterweight portion 24 is formed separately from the rear frame portion 11c and secured to the rear portion of the rear frame portion 11c with bolts (not shown).

The engine 25 is secured to the front side of the lower portion of the rear frame portion 11c, and an air conditioner 26 is provided on the rear side of the upper portion of the rear frame portion 11c. As shown in Fig. 2, a motor generator 28 is connected to the engine 25 via a clutch 27. The motor generator 28 can be appropriately switched between a power generating mode where it operates as a power generator and a motor mode where it operates as a motor. In the power generating mode, the motor generator 28 is driven by the engine 25 so as to generate power which is then stored (charged) in a battery (secondary battery) 29. In the motor mode, the motor generator 28 receives power from the battery 29 and actuates the hydraulic pump 30. This switching control is carried out on the basis of an instruction from a control unit through an inverter assembly (not shown).

In the case where the motor generator 28 is in the power generating mode, the engine 25 functions as the drive source for the motor generator 28 and the hydraulic pump 30. Meanwhile, in the case when the motor generator 28 is in the motor mode, the engine 25 and the motor generator 28 function as the drive source for the hydraulic pump 30. Here, it is also possible to disconnect the clutch 27 in the motor mode so that only the motor generator 28, without the engine 25, is used as the drive source for the hydraulic pump 30. The control of disconnecting and connecting the clutch 27 is carried out through a control signal from the control unit. That is to say, in the case where the motor generator 28 is in the motor mode, the motor generator 28 functions as the drive source for the hydraulic pump 30.

The battery 29 stores the electricity generated by the motor generator 28 in the power generating mode and supplies the driving power to the vehicle driving motor 23 and the motor generator 28, if necessary, for the running and the cargo handling operations of the forklift 10. The charging and discharging of the battery 29 are controlled via an inverter assembly connected to the control unit.

A radiator 31 for cooling the cooling water of the engine 25 is accommodated in a accommodating portion formed in the counterweight portion 24.

A hood 32 for covering the engine 25 and the air conditioner 26 is provided above the rear frame portion 11c so that it can be opened and closed. A seat 33 is provided above the hood 32. An armrest 34 for the operator to rest an arm is mounted on the right side of the seat 33. The armrest 34 rotates (displaces) between the position for use where the portion on which an arm rests is placed horizontally (state of Fig. 1, for example) and the position for non-use where the portion on which an arm rests is tilted to the rear. A cargo handling operation portion 35 for operating the actuators for loading and unloading of the lift cylinder 15, the tilt cylinder and the like is provided in the front portion of the armrest 34. The cargo handling operation portion 35 includes a lift lever for the operations of raising and lowering the fork 13 and a tilt lever for the operations of tilting the mast 12 forward and backward.

As shown in Fig. 3, the air conditioner 26 is formed as a module which includes an electric compressor 36, a condenser 37, a receiver 38 and a unit body 39. The electric compressor 36, the condenser 37, the receiver 38 and the unit body 39 are connected to one another with pipes 26a. The unit body 39 includes an expander, an evaporator and a blower. As shown in Fig. 1, a discharge outlet 40 for the air for cooling the condenser 37 of the air conditioner 26 is provided in a side portion close to the rear portion of the body. The air conditioner 26 is placed in such a location that the condenser 37 corresponds to the discharge outlet 40.

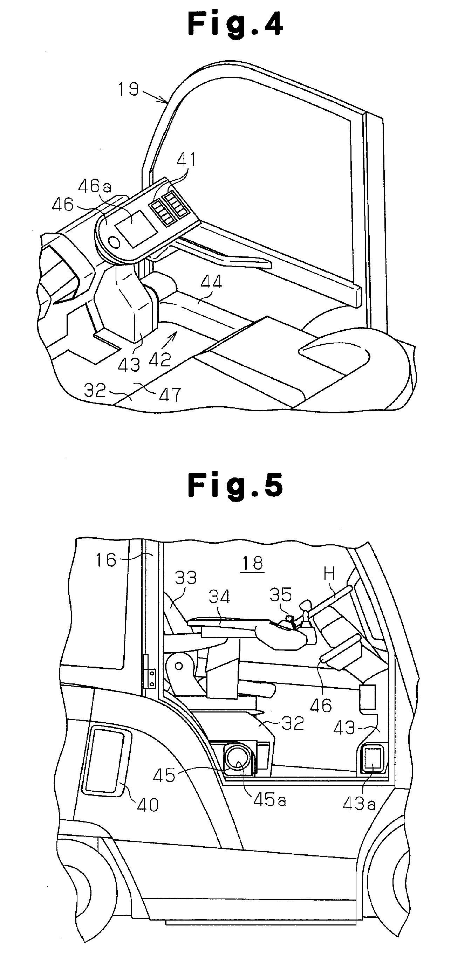

As shown in Figs. 2 and 4, a duct outlet 41 for the cooled air from the air conditioner 26 is provided in the front portion of the cab 18. A duct 42 for connecting the air conditioner 26 to the duct outlet 41 includes a support duct 43, a door duct 44 and a fixed duct 45. The support duct 43 is provided with the duct outlet 41. The door duct 44 is attached to the door 19 so as to be moveable together with the door 19. The fixed duct 45 connects the door duct 44 to the air conditioner 26. The door duct 44 is provided inside the door 19, and in the state where the door 19 is closed, the inlet 44a of the door duct 44 (shown in Fig. 1) is connected to the outlet 45a of the fixed duct 45 (shown in Fig. 5) in an air tight state, and the outlet 44b of the door duct 44 (shown in Fig. 1) is connected to the inlet 43a of the support duct 43 (shown in Fig. 5) in an air tight state.

As shown in Fig. 4, the support duct 43 is provided with the duct outlet 41 in the upper end portion and has the inlet 43a on the surface facing the lower portion of the door 19 (shown in Fig. 5). The support duct 43 also functions as the support for an instrument panel 46, and the duct outlet 41 and the instrument panel 46 are integrally formed. As shown in Figs. 2 and 4, the instrument panel 46 is provided with a display 46a, and the display 46a also functions as a touch panel. The outlet 45a of the fixed duct 45 is created in a location facing the door 19.

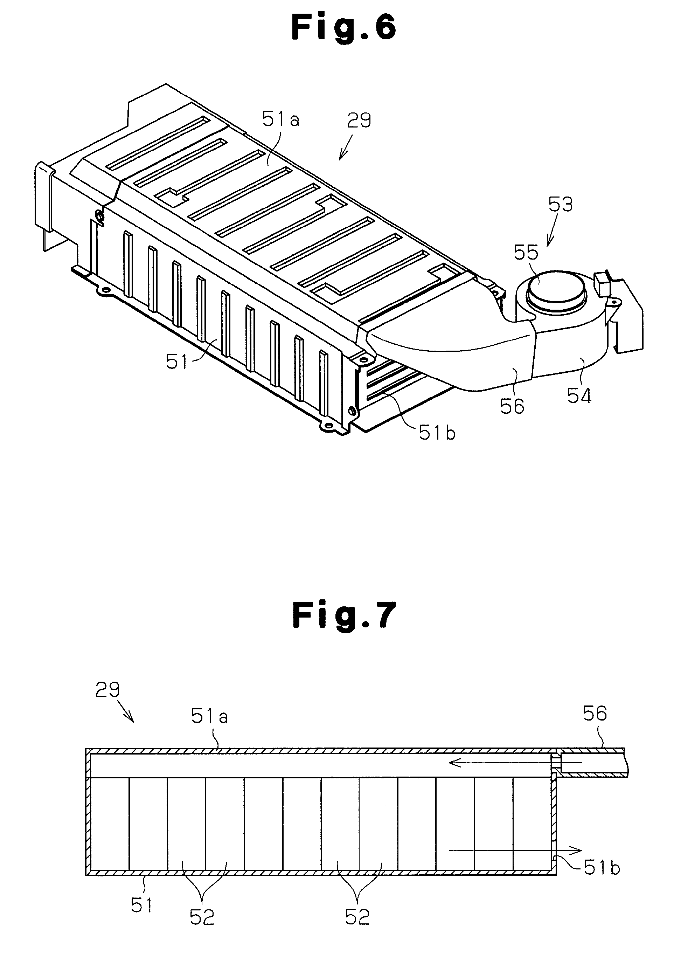

As shown in Fig. 2, a battery accommodating portion 48 is provided in front of the hood 32 and beneath the cab 18, that is to say, beneath the floor 47. The battery accommodating portion 48 is formed of the vehicle body frame 11 so as to extend in the direction of the width of the body. The battery accommodating portion 48 is provided beneath the floor 47 for supporting the feet of the operator who sits in the seat 33. As shown in Fig. 2, the battery accommodating portion 48 is not provided so as to extend throughout the entire width of the body, but provided toward the right of the body according to this embodiment. The battery accommodating portion 48 accommodates the battery 29. That is to say, the battery 29 is placed in front of the engine 25 and beneath the floor 47. As shown in Fig. 7, a plurality of battery cells 52 are accommodated within the battery case 51 of the battery 29. A nickel hydrogen storage battery, for example, is used as the battery 29. As shown in Fig. 1, a fuel tank 49 and a hydraulic oil tank 50 (shown in Fig. 1) are placed beneath the battery 29.

An air blowing apparatus 53 for blowing air for cooling against the battery 29 is provided beneath the floor 47 and in the vicinity of the battery accommodating portion 48. As shown in Fig. 6, the air blowing apparatus 53 includes a blower 54, an air intake portion 55, which is connected to the blower 54, and an air sending portion 56, which is connected to the blower 54. As shown in Fig. 2, according to this embodiment, the air intake portion 55 is placed in the vicinity of an opening 32a created in the hood 32 so as to take in air from inside the cab 18.

As shown in Figs. 6 and 7, the battery case 51 has a rectangular parallelepiped external form. An inlet for guiding air for cooling, which is sent by the air blowing apparatus 53, into the case 51 is created in the lid portion 51a, and an air sending portion 56 is connected to this inlet. A discharge hole 51b for discharging the air that has been guided into the case to the outside is created in the battery case 51 beneath the inlet on the same side as the inlet. The air that has been guided into the battery case 51 through the inlet reaches the rear of the case 51, and after that, moves toward the discharge hole 51b and is discharged through the discharge hole 51b. In addition, a connection portion 51c, to which a high voltage plug 60 is connected, is provided in the end portion of the battery case 51 on the side opposite to the side where the discharge hole 51b is provided. The high voltage plug 60 supplies power from the battery 29 to the vehicle driving motor 23 and to the motor generator 28 in a state of being connected (linked) to the above described connection portion 51c. Thus, a state where the power supply to the vehicle driving motor 23 and the motor generator 28 is cut off can be maintained in a state where the connection to the above described connection portion 51c is disconnected. Hooks (not shown) for holding wires for suspending the battery case 51 are provided to the battery case 51.

Next, the operation of the forklift 10, which is formed as described above, will be described. The forklift 10 runs by driving the vehicle driving motor 23. At the time of the cargo handling operations, the hydraulic pump 30 is actuated by the motor generator 28 and the engine 25. In the case of a forklift provided with only one of the motor or engine 25, it is necessary to mount a large scale motor or engine in order to deal with the maximum load. In many cases, such a motor or engine is driven in a state of a low output, thereby making the energy efficiency poor. In the case of the forklift 10 according to the present embodiment, however, the vehicle driving motor 23, the motor generator 28, and the engine 25 are driven so that the output is in a range for efficient driving. Accordingly, the fuel efficiency increases and the time for driving the engine 25 becomes short in comparison with that of engine forklifts, and thus, the amount of discharge of the exhaust gases (carbon dioxide and NOx) becomes small.

The vehicle driving motor 23 and the motor generator 28 in the motor mode are driven by the power supplied from the battery 29. At this time, the battery 29 emits heat. In the case where no measures are taken against an increase in the temperature of the battery 29, the output of the battery 29 is lowered and the life is shortened, and therefore, it is necessary to suppress an increase in the temperature of the battery 29. In order to do so, the locations where the battery 29 and the engine 25 are placed may be at a large distance. In order to miniaturize the body, however, it is difficult for the locations where the battery 29 and the engine 25 are placed to be at a large distance, and the battery 29 is placed near the engine 25, which emits a large amount of heat. According to this embodiment, the battery 29 is placed in front of the engine 25 and beneath the floor 47. This location where the battery 29 is placed is separated from the path for discharging the heat emitted from the engine 25 since the radiator 31 for cooling the water for cooling the engine 25 is placed in the rear portion of the forklift 10. Therefore, the heat emitted from the engine 25 flows toward the rear portion from the front portion of the vehicle. Accordingly, the heat emitted from the engine 25 can be prevented from adversely affecting the battery 29.

When the main switch of the forklift 10 is turned on, the blower 54 is driven so that air is drawn from the inside of the cab 18 through the air intake portion 55 via the opening 32a of the hood 32, and at the same time, air is sent into the battery case 51 from the air sending portion 56. As shown in Fig. 7, the air that has been sent into the battery case 51 flows toward the bottom of the upper portion of the battery case 51. After that, the direction of the air flow is reversed so that the air flows toward the discharge hole 51b through the lower portion of the battery case 51. The air cools the battery cells 52 within the battery case 51, and after that, is discharged to the outside of the battery case 51 through the discharge hole 51b. The air that has been discharged to the outside of the battery case 51 through the discharge hole 51b cools the hydraulic oil tank 50.

When the air temperature becomes high and the air conditioner 26 is activated, the inside of the cab 18 is cooled with the air that has been cooled by the air conditioner 26, and therefore, the temperature of the air within the cab 18 becomes lower than the temperature of the outside air. The blower 54 draws in the air from the inside of the cab 18 and blows the air into the battery case 51, and therefore, the effects of cooling the battery 29 are enhanced in comparison with those in the configuration where the outside air is drawn in and blown into the battery case 51.

In the case where the battery 29 is accommodated in the battery accommodating portion 48 or in the case where the battery 29 is taken out from the battery accommodating portion 48 in order to replace the battery, the upper portion of the battery accommodating portion 48 is opened by removing at least the floor 47 which covers the portion above the battery accommodating portion 48. In this state, the hooks of wires are engaged with the hooks of the battery case 51, and the battery case 51 is lifted up from the inside of the battery accommodating portion 48 by a crane via the wires. Thus, the battery case 51 is lifted until the lower end of the battery case 51 become higher than the upper end of the battery accommodating portion 48, and after that, moved in the direction of the width of the vehicle so as to be mounted on a battery carrying vehicle (not shown).

Next, a battery case 51 which accommodates battery cells that have already been charged is accommodated in the battery accommodating portion 48 through the procedure opposite to the operation for taking out the battery 29. Then, the floor 47 is secured to the predetermined location.

This embodiment has the following advantages.
(1) The battery 29 is susceptible to an increase in the temperature. However, since the battery 29 is placed in a location so as to be separated from the path for discharging the heat emitted from the engine 25, the heat emitted from the engine 25 is prevented from adversely affecting the battery 29.
(2) The battery 29 is placed in front of the engine 25 and beneath the floor 47. In general, in industrial vehicles, such as forklifts, the radiator 31 for cooling the water for cooling the engine 25 is provided in the rear of the vehicle, and thus, the heat emitted from the engine 25 flows through a path in the direction toward the rear from the front of the vehicle. Accordingly, the heat emitted from the engine 25 is less likely to adversely affect the battery 29.
(3) The battery 29 is placed in front of the hood 32 and beneath the floor 47. Accordingly, the battery 29 is easily accommodated in the battery accommodating portion 48, and maintenance can be carried out on the battery 29 simply by removing the floor 47 without opening or closing the hood 32.
(4) The connection portion 51c of the battery 29, to which the high voltage plug 60 is connected, is placed in a location which is close to either the left side or the right side of the forklift 10. That is to say, the battery 29 is placed so that the high voltage plug 60 can be easily pulled out. Accordingly, the power source can be easily cut off by pulling out the high voltage plug 60 from the connection portion 51c of the battery 29 when maintenance of the electrical system is carried out.
(5) The forklift 10 is provided with the air blowing apparatus 53 for blowing air for cooling against the battery 29. Accordingly, the battery 29 is efficiently cooled not only through the arrangement of the battery 29, but also through the arrangement of the air blowing apparatus 53.
(6) The forklift 10 is provided with the cab 18 which can be opened to the outside through the doors 19. In addition, it is possible to cool the inside of the cab 18 by means of the air conditioner 26. The air blowing apparatus 53 draws in the air from the inside of the cab 18 and blows the air to the battery 29. Accordingly, the battery 29 is efficiently cooled in comparison with the case where the outside air is drawn in and blown to the battery.
(7) The air intake portion 55 of the air blowing apparatus 53 is placed in the vicinity of the opening 32a created in the lower portion of the hood 32 on the front side so that the air can be taken in from the inside of the cab 18. Accordingly, the air is efficiently sent from the inside of the cab 18 to the battery 29 without drawing in trash and the like on the floor 47.
(8) The air blown into the battery case 51 flows through the upper portion of the battery case 51 towards the rear. After that, the direction of the flow of the air is reversed and the air flows through the lower portion of the battery case towards the discharge hole 51b. Accordingly, the air blown into the battery case 51 efficiently cools the battery 29.
(9) The hydraulic oil tank 50 is placed in a portion corresponding to the discharge hole 51b of the battery case 51, and therefore, the air that has been discharged to the outside of the battery case 51 through the discharge hole 51b cools the hydraulic oil tank 50, and thus, contributes to cooling of the hydraulic oil.

It should be apparent to those skilled in the art that the present invention may be embodied in many other specific forms without departing from the spirit or scope of the invention. Particularly, it should be understood that the invention may be embodied in the following forms.

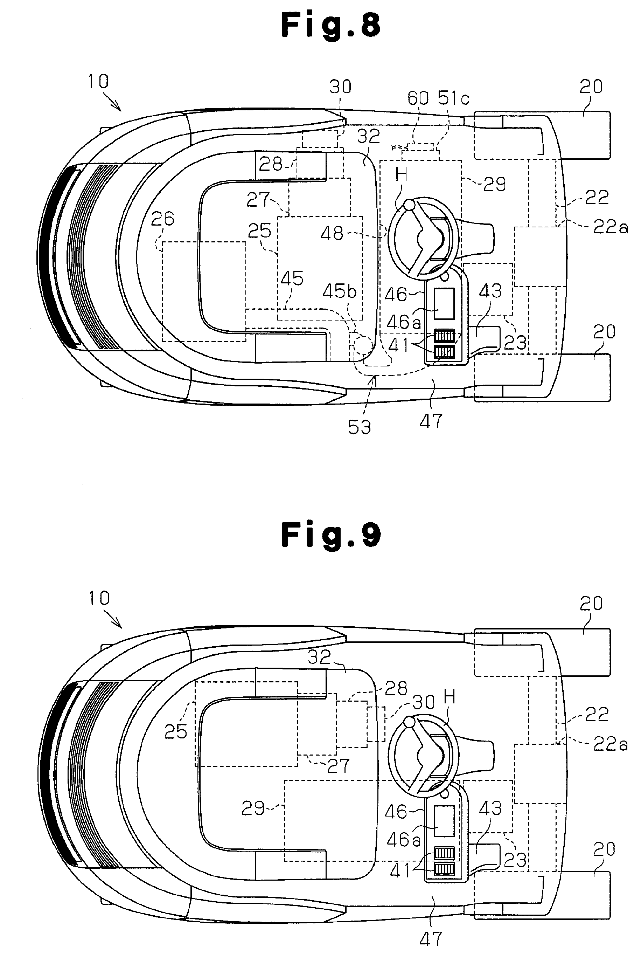

Although the air blowing apparatus 53 has a configuration where air is drawn in from the inside of the cab 18, a configuration for drawing in a portion of the cooled air which flows through the duct 42, which connects the air conditioner 26 to the cooled air duct outlet 41, and blows the air to the battery 29 may be provided. As shown in Fig. 8, for example, a branch portion 45b is provided to the fixed duct 45, which forms a portion of the duct 42, and the air blowing apparatus 53 is placed in the vicinity of the branch portion 45b. In addition, the lid portion 51a of the battery case 51 may be installed with the left and right sides reversed. In this case, the air blowing apparatus 53 draws in a portion of the air cooled by the air conditioner 26 from the fixed duct 45 and blows the air to the battery 29, and therefore, the efficiency of cooling the battery 29 is increased.

In the case where the air blowing apparatus 53 draws in the air from the inside of the cab 18 through the air intake portion 55, an opening may be provided in the floor 47 instead of providing the opening 32a in the hood 32.

The air blowing apparatus 53 may draw in the air from beneath the floor 47 or the outside air instead of the air from the inside of the cab 18 through the air intake portion 55.

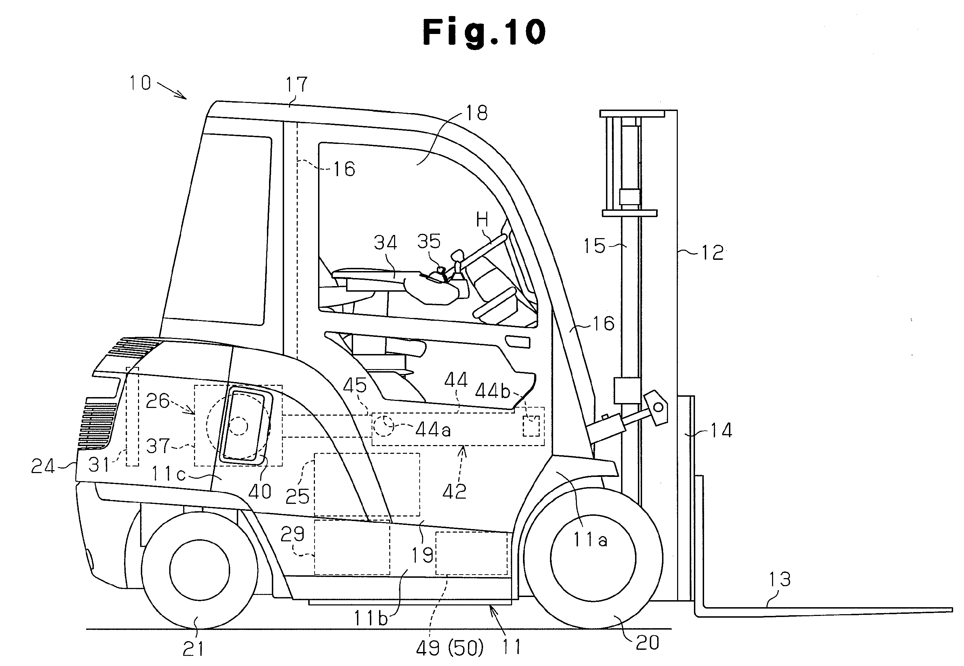

The configuration is not limited to the configuration that where the battery 29 is placed in front of the engine 25 as long as the battery 29 is placed in a location which is separated from the path for discharging the heat emitted from the engine 25. As shown in Fig. 9, for example, the battery 29 may be placed on the side of the engine 25. In Fig. 9, the engine 25, the clutch 27, the motor generator 28, and the hydraulic pump 30 are aligned in the front to rear direction along the vehicle body so as to be parallel to the longitudinal direction of the battery 29. In addition, as shown in Fig. 10, the battery 29 may be placed beneath the engine 25.

The locations and the numbers of inlets and the discharge holes 51b of the battery case 51 may be changed as necessary. In addition, the battery case 51 is not limited to the configuration where the battery case 51 is tightly closed with the lid portion 51a and may have a configuration where the upper side is open, and the air sending portion 56 of the air blowing apparatus 53 blows air towards the open portion.

The location in which the air conditioner 26 is placed is not limited to the location beneath the hood 32, and the air conditioner 26 may be placed above the head guard 17 or above the rear frame portion 11c and the counterweight portion 24.

The duct outlet 41 of the air conditioner 26 is not limited to being on the side of the steering wheel H, and may be provided in the upper portion of the cab 18 or in the front portion of the hood 32. In these cases, although it is difficult to send air towards the face of the operator sitting in the seat 33, the inside of the cab 18 can be cooled.

It is not necessary for the forklift 10 to be provided with the air conditioner 26. In addition, the cab 18 of the forklift 10 is not limited to being of a cab type, but may be of a type having no doors 19 or of a type surrounded only by the poles 16 and the head guard 17.

The battery 29 is not limited to a nickel hydrogen storage battery, but may be other secondary batteries, such as a lithium ion battery.

A power generator and a motor for actuating a hydraulic pump may be separately provided instead of the motor generator 28. In this case, the hydraulic pump 30 is driven by the engine 25 and the motor for driving a hydraulic pump. However, the configuration where the motor generator 28 is provided becomes simpler so that the space for arrangement is reduced.

Instead of being provided in the armrest 34, the cargo handling operation portion 35 may be provided, for example, close to the steering wheel H in the front portion of the cab 18.

The present invention may be applied any type of industrial vehicles that are provided with a drive source for running the vehicle and a drive source for operations, and used for agriculture, civil engineering and construction, and cargo handling, without being limited to the hybrid forklift 10. That is to say, the invention may be applied to hybrid industrial vehicles having a motor used as a drive source for running the vehicle and an engine and a motor used as a drive source for operations.

It is undesirable for the temperature of the battery to become high not only in hybrid industrial vehicles, but also in battery-powered vehicles where a motor having a secondary battery as a power source is used as the drive source for running the vehicle and the drive source for operations. In this respect, it becomes possible to extend the life of the battery by adopting the configuration where the battery is cooled by using the air blowing apparatus 53 in the battery-powered vehicle. Concretely, the air blowing apparatus 53 according to the above described embodiment may be applied to battery-powered industrial vehicles.

The present examples and embodiments are to be considered as illustrative and not restrictive, and the invention is not to be limited to the details given herein, but may be modified within the scope and equivalence of the appended claims.

A hybrid forklift having a vehicle driving motor, a hydraulic pump, an engine, a pump actuating motor, and a battery is disclosed. The vehicle driving motor is the drive source for running the forklift. The engine and the pump actuating motor are the drive sources for the hydraulic pump. The battery is the power supply for the vehicle driving motor and the pump actuating motor. The battery is placed lateral to, beneath, or in front of the engine so as to be separated from the path for discharging the heat emitted from the engine.

## Claims

1. A hybrid industrial vehicle, comprising:
a vehicle driving motor (23), which is a drive source for driving the vehicle (10);
a hydraulic pump (30);
an engine (25) and a pump actuating motor (28), which are drive sources for the hydraulic pump (30); and
a battery (29), which is a power source for said the vehicle driving motor (23) and the pump actuating motor (28), the hybrid industrial vehicle being **characterized in that**
the battery (29) is placed lateral to, beneath, or in front of the engine (25) so as to be separated from a path for discharging heat emitted from the engine (25).

2. The industrial vehicle according to claim 1, **characterized in that** the industrial vehicle (10) is provided with a floor (47), and the battery (29) is placed in front of the engine (25) and beneath the floor (47).

3. The industrial vehicle according to claim 1 or 2, **characterized by** an air blowing apparatus (53) for blowing air for cooling against the battery (29).

4. The industrial vehicle according to claim 3, **characterized by**:
a door (19);
a cab (18), which can be opened to the outside through the door (19); and
an air conditioner (26) capable of cooling the cab (18),
wherein the air blowing apparatus (53) draws in air from the inside of the cab (18) and blows the air to the battery (29).

5. The industrial vehicle according to claim 3, **characterized by**:
an air conditioner (26); and
a duct (42), which extends from the air conditioner (26) and through which cooled air sent out from the air conditioner (26) flows,
wherein the air blowing apparatus (53) draws in a portion of the cooled air that flows through the duct (42) and blows the air to the battery (29).

6. The industrial vehicle according to claim 5, **characterized in that** the duct (42) has a branch portion (45b) which extends to the air blowing apparatus (53).

7. The industrial vehicle according to any of claims 1 to 6, **characterized in that** the battery (29) has a connection portion (51c) to which a plug (60) is connected, the power of the battery (29) can be supplied to the vehicle driving motor (23) and the pump actuating motor (28) in a state where the plug (60) is connected to the connection portion (51c), and the connection portion (51c) is placed in a location which is close to one of left and right sides of the industrial vehicle (10).

8. The industrial vehicle according to any of claims 1 to 7, **characterized in that** the pump actuating motor (28) is a motor generator which functions as a motor and a power generator.

9. A battery-powered industrial vehicle, comprising:
a drive source (23) for driving the vehicle (10);
a hydraulic pump (30);
a motor (28), which is a drive source for the hydraulic pump (30); and
a battery (29), which is a power supply for the motor (28),
**characterized by** an air blowing apparatus (53) for blowing air for cooling against the battery (29).
